Europäisches Patentamt

European Patent Office

Office européen des brevets

(19)

(11) Veröffentlichungsnummer: **0 144 589**
A2

## (12) EUROPÄISCHE PATENTANMELDUNG

(21) Anmeldenummer: 84111625.4

(22) Anmeldetag: 28.09.84

(51) Int. Cl.⁴: **B 21 D 43/05**
B 21 D 53/30, B 65 G 47/82

(30) Priorität: 10.12.83 DE 3344797

(43) Veröffentlichungstag der Anmeldung:
19.06.85 Patentblatt 85/25

(84) Benannte Vertragsstaaten:
AT BE CH DE FR GB IT LI LU NL SE

(71) Anmelder: Th. Kieserling & Albrecht GmbH & Co.
Birkenweiher 66
D-5650 Solingen 1(DE)

(72) Erfinder: Junklewitz, Hugo
Kirchweg 14
D-5653 Leichlingen(DE)

(54) Transportvorrichtung für Felgenrohlinge.

(57) Es ist eine Transportvorrichtung für Felgenrohlinge (5) zwischen den Maschinen (2, 3) der Einständerbauart mit fliegender Lagerung der stirnseitig angebrachten Werkzeuge (6, 7) zur Umfangsprofilierung der Felgenrohlinge (5, 61) gezeigt. Die drei Abschnitte der Bewegung der Felgenrohlinge von einer Maschine (2) zur anderen (3), nämlich das Herausziehen der Felgenrohlinge aus einer ersten Felgenprofiliermaschine (2), der sich anschließende Quertransport und schließlich das Einbringen in die nächste Felgenprofiliermaschine (3) erfolgen in einem Zuge auf einer U-förmigen Bahn. Die U-Form hat zwei parallele Schenkel und einen gerundeten, beide Schenkel verbindenden Abschnitt. Die gesamte Transportstrecke wird mit ein und demselben Antrieb durchgeführt. Transportfinger (26, 27) bewegen den Tisch (4) mit den Felgenrohlingen (5, 61) auf der U-förmigen Bahn. Die U-form kann durch eine Schablone (39) oder durch eine von Kettenrädern U-förmig aufgespannte Kette gebildet werden.
Der Antrieb des Tisches (4) erhält durch die Zwischenschaltung einer Kurbelschwinge (34) einen sinusförmigen Geschwindigkeitsverlauf.

./...

FIG.1

- 1 -

## Transportvorrichtung für Felgenrohlinge

Die Erfindung bezieht sich auf eine Transportvorrichtung für Felgenrohlinge gem. dem Oberbegriff von Anspruch 1.

Bei der Herstellung von Felgen für Fahrzeuge, insbesondere für Kraftfahrzeuge, werden mehrere Felgenprofiliermaschinen benötigt, um aus dem zu einem Ring zusammengeschweissten Blechband eine an ihrem Umfang profilierte Felge zu machen. Zunächst muß die Schweißnaht bearbeitet werden, damit ein Ring konstanten Querschnitts entsteht, im Anschluß daran wird der Rohling am Umfang profiliert.

Das Profilieren erfolgt meistens in mehreren Verfahrensabschnitten in mehreren Maschinen, da die gesamte gewünschte Profiltiefe der fertigen Felge nicht mit einem Werkzeugsatz gefertigt werden kann. Die für die Erfindung in Einständerbauart ausgeführten Maschinen mit fliegend gelagerten Werkzeugen an ihren Stirnseiten zur Profilierung der Felgenrohlinge werden unmittelbar nebeneinander gestellt und stirnseitig beschickt. Dabei weisen die Profiliermaschinen ein inneres Rollenwerkzeug mit dem Negativprofil des für den Felgenrohling gewünschten Profils und ein entsprechend spiegelsymmetrisch profiliertes äußeres Rollenwerkzeug auf. Die Felgenrohlinge werden in Richtung ihrer Längsachse auf das innere Rollenwerkzeug gesteckt. Zu dem sich daran anschließenden Profiliervorgang werden die Profilierrollen bei eingebrachtem Rohling in radialer Richtung zusammengefahren und wälzen sich auf dem dabei allmählich umgeformten Rohling ab.

./...

- 2 -

Die Erfindung befaßt sich mit dem Transport der Felgenrohlinge zwischen den einzelnen Profilierstationen.

Die innere Profilierrolle muß aus Steifigkeits- und Verschleißgründen möglichst groß dimensioniert werden. Voraussetzung hierfür ist, daß der in der Station profilierte Rohling mit dem durch die Profiltiefe verringerten Innendurchmesser noch von der Rolle abgezogen werden kann. Das innere Rollenwerkzeug wird so groß ausgeführt, daß die "Luft" zwischen diesem und dem profilierten Rohling möglichst klein wird. Der klein gewählte Luftspalt zwischen dem Innenwerkzeug und dem Felgenrohling verlangt eine präzise arbeitende Transportvorrichtung, die den Felgenrohling auf geradliniger Bahn, parallel zur Längsachse von Felgenrohling und Innenwerkzeug aus der Maschine herauszieht, dann quer verschiebt und in die nächste Station wieder achsial einführt.

Aus der Praxis ist es bekannt, mehrere Maschinen der eingangs genannten Art zur Profilierung von Felgenrohlingen nebeneinander zu stellen und die nicht oder teilweise profilierten Rohlinge in drei Bewegungsabschnitten zwischen den Stationen, d.h. zwischen den Maschinen und der Aufnahme- bzw. Abgabestation zu bewegen. Mit einem ersten Bewegungsabschnitt wird der Felgenrohling zunächst aus der ersten Station herausgezogen, dann im zweiten Bewegungsabschnitt quer transportiert, um den Zwischenraum zwischen den benachbarten Maschinen zu überbrücken, um dann im dritten Bewegungsabschnitt der nächsten Station zugeführt zu werden. Die aufeinander folgenden Bewegungsrichtungen stehen dabei rechtwinklig zueinander und bilden zusammen betrachtet ein "U". Innerhalb jedes Bewegungsabschnittes wird die gesamte bewegte Masse von Null an beschleunigt und auf Null abgebremst. Dieses dreifache Beschleunigen und Abbremsen erfordert einen enormen Energieaufwand und lange Transportzeiten.

../...

- 3 -

Der vorliegenden Erfindung liegt die Aufgabe zugrunde, eine Lösung für die Transportbewegung der Felgenrohlinge zwischen den einzelnen Stationen einer Felgenprofiliereinheit zu finden, die einen präzisen, schnellen und beschleunigungsarmen Bewegungsablauf mit zueinander parallelen axialen und mit Querbewegungskomponenten gewährleistet.

Die Lösung dieser Aufgabe ist im Kennzeichen von Anspruch 1 wiedergegeben. Der Transport der Felgenrohlinge in der erfindungsgemäßen Vorrichtung erfolgt vorzugsweise in waagerechter Ebene. Die erfindungsgemäße Lösung vermeidet einen eckigen Bewegungsverlauf der Felgenrohlinge zwischen den Profilierungsstationen. Der Antrieb erledigt die Bewegung über das ganze "U" in einem Zuge, d.h. ohne ein zwischenzeitliches Abbremsen und erneutes Beschleunigen durch den Antrieb innerhalb der jetzt einzigen Bewegungsphase. Die U-förmige Bewegung des/der Tische(s) mit den Aufnahmen für die Felgenrohlinge ist eine in radialer Richtung variierte Schwenkbewegung des Transportfingers. Die U-förmige Bewegung wird dem Tisch über einen von ihm abstehenden Zapfen vermittelt, der eine Drehbewegung zwischen Tisch und Transportfinger erlaubt. Um ein ungewolltes Verschwenken des Tisches um die Drehachse des Zapfens zu vermeiden, ist die Parallelführung des Tisches vorgesehen. Vorzugsweise wird eine Anlenkung des Tisches vorgesehen, die jegliche Rotation des Tisches um die Zapfenachse vermeidet.

Die mit Anspruch 2 verfolgte bevorzugte Ausführungsform für die Parallelführung stellt sich schematisch als ein 4-Gelenk-Getriebe in parallelogrammartiger Ausführung dar, mit 2 gleichlangen Schwingen und mit gleichlanger Basis und

0144589

---

- 4 -

Koppel, wobei die zweiTransportfinger die Schwingen in dem
4-Gelenk-Getriebe darstellen.

Die bevorzugte Weiterbildung der Erfindung gem. Anspruch 3 gestattet eine freie Gestaltung des Bogens der "U"-Form. Der Bogen kann bezüglich der auftretenden Beschleunigungen oder bezüglich der Fertigungsmöglichkeiten optimiert werden. Die U-Form ist vollständig in der Schablone ausgebildet.

Eine weitere vorteilhafte Ausführungsform der Erfindung ist in Anspruch 4 und 5 wiedergegeben. Fertigungsmäßig stellt diese Ausführung keine besonderen Anforderungen. Zwei Kettenräder bilden die Rundungen des "U"- Bogens aus, während mindestens ein weiteres Kettenrad in Verbindung mit den beiden anderen Kettenrädern zwei Kettenbereiche bildet, die den Schenkeln des "U" entsprechen.

Bei allen erwähnten Ausführungen muß von dem nicht zu schwenkenden, vorzugsweise waagerechten Tisch ein als Zapfen ausgebildeter Mitnehmer abstehen, der eine Relativdrehung zwischen dem Transportfinger und dem Tisch zuläßt, damit die vorzugsweise vorgesehene Schwenkbewegung des Transportfingers die Parallelverschiebung des Tisches nicht hindert. Im Falle der Lösung nach den Ansprüchen 3 und 4 wird der Transportfinger durch die Kettenräder mit der Kette ersetzt. Dieser Gedanke wird mit Anspruch 6 verfolgt.

Zur weiteren Ausgestaltung der Erfindung kann die Lösung nach Anspruch 7 vorgesehen sein, die eine bauliche Vereinfachung mit sich bringt. Gleichzeitig haben die Transportfinger die Aufgabe das Gewicht des Tisches zu tragen.

Bei der in Anspruch 8 skizzierten Antriebslösung für den Transportfinger wechselt die Eingangsbewegung zweimal zwischen einer Schwenk- und einer Linearbewegung und erzielt dadurch für den Transportfinger eine Vermeidung von Beschleu-

- 5 -

nigungsspitzen für weite Bereiche des Antriebs und für den Tisch selbst.

Die Erfindung wird im weiteren anhand der Zeichnung erläutert.

Dabei zeigen:

Fig.1    :    Eine Vorderansicht der erfindungsgemäßen Transportvorrichtung,

Fig.2    :    Eine Darstellung einer Ausführungsform mit Schablone, in verkleinertem Maßstab,

Fig.3    :    Eine schematische Darstellung einer Ausführungsform der Transporteinrichtung mit Kettenantrieb

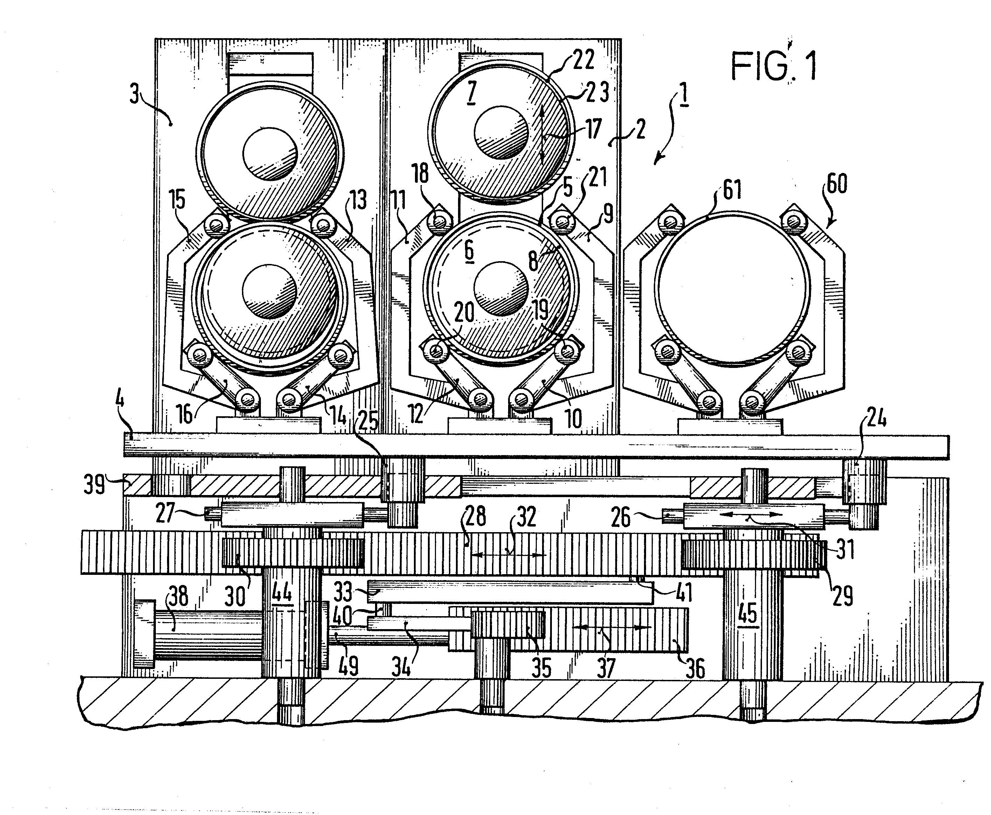

Die in Fig. 1 gezeigte Felgenprofiliereinheit 1 besteht aus zwei Felgenprofiliermaschinen 2 und 3, einem Tisch 4 mit 3 Transportaufnahmen, die untereinander gleich sind und, wie am Beispiel der mittleren Transportaufnahme gezeigt, von 4 Spannarmen 9....12 gebildet werden, sowie einer Aufnahmestation 60 für die Felgenrohlinge 5, 61 und aus einem Antrieb 24....38, 40, 41, 44, 45 und 49 für den Tisch 4. Die nicht gezeigte Abgabestation ist entsprechend der Aufnahmestation 60 ausgebildet.

Auf der der Seite des Transportaufnahmen abgewandten Seite des Tisches 4 sind zwei Mitnehmerbolzen 24, 25 angeformt, von denen einer 25 eine unterhalb des Tisches angeordnete, am Maschinenrahmen befestigte Schablone 39 durchgreift. In der Schablone 39 ist eine U-förmige Führung 43 ausgebildet, in der der Mitnehmerbolzen 25 gleitet. Die U-förmige Führung 43 besteht aus 2 parallelen

./...

- 6 -

Schenkeln 46, 47 die in ihrem Grund durch einen an seinen
Enden gerundeten und in seinem mittleren Bereich geraden
Führungsbabschnitt 48 miteinander verbunden sind. Die
U-förmige Führung ist an der Schablone ausgebildet und
stellt im Zusammenwirken mit dem gemeinsamen, synchronen
Antrieb für die Transportfinger 26, 27 eine Parallelführung
für den Tisch 4 dar. Der Mitnehmerbolzen 25 wird von dem
Transportfinger 27 durch die U-förmige Führung 43 bewegt.
Beide Transportfinger sind an den Mitnehmerbolzen drehbar
befestigt und in ortsfest aber drehbar im Maschinenrahmen
gelagerten Wellen 44, 45 in radialer Richtung, gem. Pfeil
31, verschiebbar geführt. Auf den Wellen 44, 45 sind,
drehfest mit diesen verbunden, Zahnräder 29, 30 angeordnet,
die synchron von einer beide verbindenden, wie ein Schlitten
geradlinig geführten Zahnstange 28 angetrieben werden. Die
Transportfinger 26, 27 tragen das Gewicht des Tisches 4 und
der darauf befestigten Transportaufnahmen und Werkstücke.

Zur Bewegung des Tisches 4 wird die Zahnstange 28 in
Richtung des Pfeiles 32 hin und her bewegt. Dabei bewegen
die Transportfinger 26, 27 den Tisch 4 in einem Zuge auf der
von der Schablone 39 vorgegebenen U-förmigen Bahn, so daß
der Felgenrohling 5 von der Felgenprofiliermaschine 2 in die
Felgenprofiliermaschine 3 befördert wird.

Die Bewegung der Zahnstange 28 erfolgt mittelbar durch
den Kolben/Zylinder 38. Die Kolbenstange 49 des Kolbens 38
bewegt eine wie ein Schlitten geradlinig geführte Zahnstange
36 in Richtung des Pfeiles 37 im Arbeitstakt der Felgenprofiliereinheit hin und her. An der Zahnstange 36 wälzt sich ein
Zahnsegment 35 einer Kurbelschwinge 34 ab. Die Kurbelschwinge ist ortsfest aber schwenkbar gelagert und hat einen
Schwenkbereich von 180°. Das freie Ende der Kurbelschwinge
ist gelenkig durch den Bolzen 40 mit einer

./...

- 7 -

Koppel 33 verbunden, die ihrerseits an der Zahnstange 28 mit einem Bolzen 41 angelenkt ist. In den beiden Endstellungen der Kurbelschwinge 34 fluchtet diese in der Draufsicht ungefähr mit der Koppel 33 und der Zahnstange 28. Der gesamte Antrieb ist unterhalb des Tisches 4 angeordnet, der somit den Antrieb von den Transportaufnahmen 9....16 trennt.

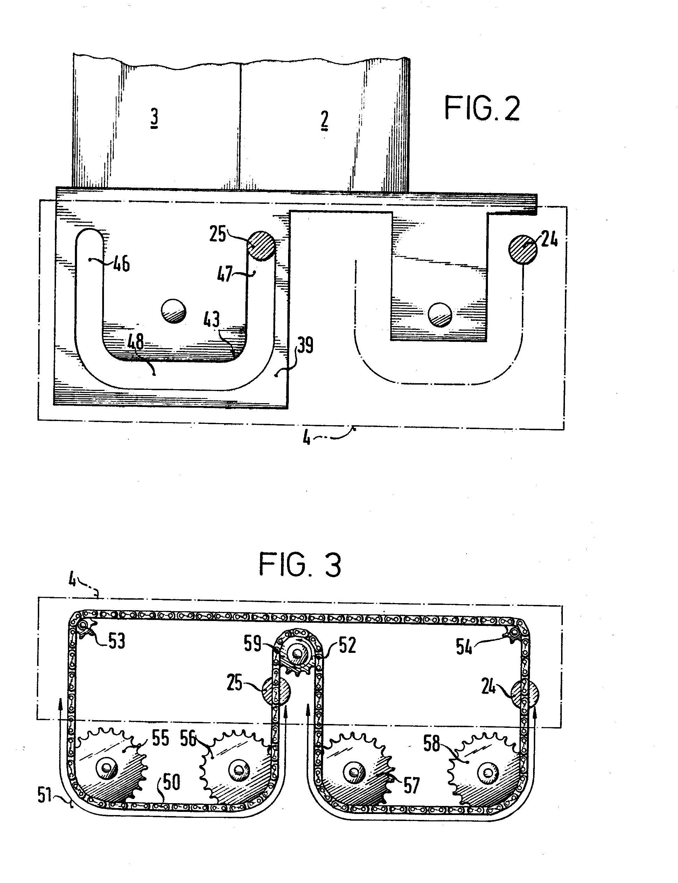

Die in Fig. 3 gezeigte Ausführungsform der Kinematik des Antriebs für den Tisch 4 erreicht die U-förmige Bahn durch die Verwendung einer Kette 50. Diese wird über jeweils 2 Kettenräder 55, 56 bzw. 57, 58 gespannt und im rückwärtigen Bereich von den Kettenrädern 53, 54 und dem in Richtung des Pfeiles 52 bewegten Antriebsritzel 59 so umgelenkt, daß sich die U-Form 51 für die hin und hergehende Bewegung der Mitnehmerbolzen 24, 25 ergibt. An Stelle der jeweils 2 nach Fig. 3 vorgesehenen  Kettenräder 55, 56 bzw. 57, 58 kann auch ein, jeweils größer zu wählendes Kettenrad Verwendung finden. Das Kettenritzel 59 kann, ähnlich wie das Zahnräder 29, 30, von einer Zahnstange oder von einem Motor mit umschaltbarer Drehrichtung angetrieben werden. Der in den Fig. 3 gestrichelt angedeutete Tisch 4 wird dabei auf der mit 51 gekennzeichneten U-förmigen Bahn mit in ihrem Grund gerundeten Ecken hin und herbewegt.

In Fig. 1 sind in den Felgenprofiliermaschinen 2 und 3 unterschiedliche Momentaufnahmen aus dem Arbeitstakt der Felgenprofiliereinheit 1 gezeigt. Während des Betriebs der Felgenprofiliereinheit haben beide Maschinen die gleiche Taktphase. Beim Transport der Felgenrohlinge 5 sind diese in beiden Maschinen in der bei der Felgenprofiliermaschine 2 gezeigten Position, in der Arbeitsphase sind beide Felgenprofiliermaschinen 2 und 3 in der bei Maschine 3

./...

---

- 8 -

gezeigten Position.

In der Felgenprofiliermaschine 2 ist die Situation nach Abschluß der Vorprofilierung wiedergegeben. Das äußere Werkzeug 7 ist entsprechend Pfeil 17 nach oben bewegt und gibt somit den vorprofilierten Felgenrohling 5 frei. Das äußere Werkzeug 7 wird um ein Maß in Richtung des Pfeiles 17 hochgefahren, daß es, auch unter Berücksichtigung der Profilabsätze 22,23 an seinem Umfang, den Felgenrohling 5 vollständig freigibt. Die Spannarme 9 ....12 sind so gesteuert, daß sie den Felgenrohling 5 vermittels der Rollen 18....21 zentrisch zum inneren Werkzeug 6 halten. Aus Toleranzgründen ist ein notwendiges Maß an Luft 8, zwischen dem inneren Werkzeug und dem Felgenrohling 5 vorgesehen. Der Felgenrohling 5 kann jetzt in achsialer Richtung geradlinig aus der Felgenprofiliermaschine 2 herausgezogen werden. Dieser Teil der Bewegung entspricht dem Abschnitt 47 in der Schablone 39.

Die Felgenprofiliermaschine 3 zeigt einen Ausschnitt aus der eigentlichen Profilierungs- d.h. Arbeitsphase. Die Spannarme 13 ....16 haben den Felgenrohling auf das innere Werkzeug abgesenkt. Das äußere Werkzeug ist auf den Felgenrohling heruntergefahren. Beide Werkzeuge sind in Rotation und bilden das fertige Profil des Felgenrings aus.

Nach Beendigung des Arbeitstaktes werden die beiden Werkstücke und die beiden äußeren Werkzeuge in die für die Felgenprofiliermaschine 2 gezeigte Position gebracht. Der Kolben/Zylinder 38 bewegt den Tisch auf U-förmiger Bahn mit gerundetem Grund und transportiert damit den Felgenrohling 5 aus der Felgenprofiliermaschine 2 in die Felgenprofiliermaschine 3 und das fertig profilierte Werkstück aus der

.../...

---

- 9 -

Felgenprofiliereinheit 1 heraus. Der auf nicht näher dargestellte Weise in die Aufnahmestation 60 eingebrachte neue
Felgenrohling 61 wird im gleichen Hub des Tisches 4 in die
Felgenprofiliermaschine 2 eingebracht.

Mit der vorbeschriebenen Felgenprofiliereinheit 1 ist
es möglich, den Transport der Felgenrohlinge zwischen den
einzelnen Maschinen 2 und 3 in einem Zuge zu erledigen. Es
wird nur ein Antrieb für den gesamten Verlauf der U-förmigen
Transportstrecke 43 benötigt. Beide gezeigten Ausführungsbeispiele weisen eine in den Endbereichen des Grundes der
U-Form gerundete Führungsbahn im auf, die eine ruckfreie
Bewegung des Tisches und der Felgenrohlinge in einem Zuge
und mit dem gleichen Transportfinger über die gesamte Länge
der U-förmigen Bahn erlaubt. Dabei sind die Anfangs- und
Endabschnitte der Transportstrecke der Felgenrohlinge exakt
in achsialer Richtung zum inneren Werkzeug und zum Felgenrohling selbst ausgerichtet. Das ermöglicht eine optimale
Auslegung der inneren Werkzeuge, die im Durchmesser kleiner
gewählt werden müßten, wenn der Felgenrohling nicht geradlinig aus der Maschine herausgezogen würde. Steifigkeit und
Lebensdauer der inneren Werkzeuge werden durch deren kräftigere Dimensionierung erhöht.

Durch die Zwischenschaltung einer Kurbelschwinge 34 und
einer Koppel 33 werden ruckartige Bewegungen in der Anfangs-
und Endphase des Transports durch einen sinusförmigen
Geschwindigkeitsverlauf vermieden.

- 10 -

Patentansprüche:

1.) Transportvorrichtung an einer Felgenprofiliereinheit
    (1) zum Transport der Felgenrohlinge (5) zwischen
    mindestens zwei Stationen (60, 2, 3) zur
    Umfangsprofilierung, die die folgenden Merkmale aufweist:
    a)   die Maschinen (2, 3) sind nebeneinander angeordnet
    b)   die Längsachse des Felgenrohlings in den
         einzelnen Stationen (60, 2, 3) ist parallel
         ausgerichtet
    c)   mindestens einen beweglichen Tisch (4) mit Antrieb
         (38) und mit mindestens zwei Transportaufnahmen
         (9....15) für die Felgenrohlinge (5), die zwischen
         den Stationen auf vorgegebener U-förmiger
         Transportstrecke geführt sind,

    gekennzeichnet durch folgende Merkmale:

    d)   die U-Form (43) für die vorgegebene Transportstrecke zwischen den Stationen (60, 2, 3) weist
         gerundete Ecken auf,
    e)   mindestens einen hin- und herbewegten von dem
         Antrieb (38) gesteuerten Transportfinger (26, 27),
         für die gesamte U-förmige Transportstrecke (47,
         48, 46),
    f)   eine Parallelführung (24....30, 42, 43) des
         Tisches (4)

./...

- 11 -

2.)  Transportvorrichtung nach Anspruch 1, dadurch
     gekennzeichnet, daß

     g)   zur Parallelführung des Tisches (4) mindestens
          zwei schwenkbare in ihrer wirksamen Länge
          veränderliche Transportfinger (26, 27) zwischen
          einem Maschinenrahmen und dem Tisch (4) vorgesehen
          sind.

3.)  Transportvorrichtung nach Anspruch 1, dadurch
     gekennzeichnet, daß

     h)   die U-Form (42, 43) an einer Schablone (39)
          ausgebildet ist.

4.)  Transportvorrichtung nach Anspruch 1, dadurch
     gekennzeichnet, daß

     i)   die U-form (51) von mindestens einer mehrfach an
          Kettenrädern (53....59) umgelenkten Kette
          vorgegeben ist.

5.)  Transportvorrichtung nach Anspruch 4, dadurch
     gekennzeichnet, daß

     k)   jede Kette (50) von mindestens drei Kettenrädern
          (53, 55, 56) aufgespannt ist und mit einem von
          einem Kettenglied abstehenden Mitnehmerbolzen (24,
          25) an dem zugeordneten Tisch (4) befestigt ist.

0144589

- 12 -

6.) Transportvorrichtung nach den Ansprüchen 1 bis 5, dadurch
gekennzeichnet, daß

    1)    der Tisch (4) mit einem von seiner Bewegungsebene
rechtwinklig abstehenden runden Mitnehmerbolzen
(25) in jede U-Form (43, 51) eingreift.

7.) Transportvorrichtung nach den Ansprüchen 1 und 2,
dadurch gekennzeichnet, daß

    m)    die Transportfinger (26, 27) einen Schwenkantrieb
(28....30) aufweisen.

8.) Transportvorrichtung nach Anspruch 1, dadurch
gekennzeichnet, daß

    n)    der Antrieb eingangs eine Kurbelschwinge (34)
aufweist, die über eine Koppel (33) einen
Schlitten steuert, der den drehbar gelagerten
Transportfingern eine synchrone Schwenkbewegung
erteilt.

0144589

FIG.1

FIG. 2

3   2

25   24

46
47
43
48   39
4

FIG. 3

4

53   59   52   54
25   24
55  56   58
50   57
51